# EUROPÄISCHE PATENTANMELDUNG

(11) **EP 2 248 573 A1**
(43) Veröffentlichungstag der Anmeldung: **10.11.2010**
(21) Anmeldenummer: 09015713.2
(22) Anmeldetag: 28.02.2007
(51) Int. Cl.: B01D 53/14

(54) **Lösungsmittel zur Abtrennung von sauren Gasbestandteilen aus technischen Gasen**

(30) Priorität: 06.03.2006 DE 102006010595
(62) Teilanmeldung aus: 07722955.7
(71) Anmelder: Uhde GmbH, 44141 Dortmund (DE)
(72) Erfinder: Snell, Alexander, Dr., 4133 Pratteln (CH); Menzel, Johannes, 45731 Waldorp (DE)

(57) **Zusammenfassung**

Flüssigkeit, enthaltend 0,1 bis 100 % eines Amins oder mehrerer Amine der Formel H₂N-CH₂(CHR₂)ₓ-(OCH₂(CHR₃)_{y})_{z}OR₁, mit R₁: C₁ bis C₈-Alkyl, R₂: H oder CH₃, R₃: H oder CH₃, x: 0 bis 3, y: 0 bis 3, z: 0 bis 10, 0 bis 99,9% eines beliebigen weiteren Lösungsmittels einschließlich Piperazin und/oder Wasser, zur Abtrennung von sauren Gasbestandteilen aus technischen Gasen.

## Beschreibung

Die Erfindung richtet sich auf ein Lösungsmittel zur Abtrennung von sauren Gasbestandteilen aus technischen Gasen, wie es in einem Verfahren eingesetzt werden kann, in dem mittels einer Flüssigkeit Sauergasbestandteile aus einem verunreinigten technischen Gas ausgewaschen werden und die Flüssigkeit anschließend regeneriert und in einen geschlossenen Kreislauf zurückgeführt wird.

Verfahren zur Abscheidung von sauren Gasbestandteilen unter Einsatz von Lösungsmitteln sind in großer Zahl bekannt. Dabei wird zwischen chemisch und physikalisch wirkenden Lösungsmitteln unterschieden. Chemisch wirkende Waschmittel sind in der Lage, schon bei kleinen bis mittleren Sauergaspartialdrücken (z.B. 0,1 bis 2 bar) Sauergaskomponenten bei hohen Beladungen effektiv zu entfernen. Bei höheren Sauergaspartialdrücken (z.B. >2 bar) lassen sich mit physikalischen Lösungsmitteln höhere Sauergasbeladungen im Lösungsmittel erzielen, wodurch physikalische Lösungsmittel bei diesen Bedingungen dann von Vorteil sind.

Als Stand der Technik für die Entfernung von Sauergaskomponenten aus technischen Gasen gilt für chemisch wirkende Lösungsmittel z.B. eine MDEA-Wäsche. In der als MDEA bezeichneten Wäsche wird als Lösungsmittel beispielsweise eine 50 Gewichts-prozentige Lösung aus Methyldiethanolamin und Wasser zum Zweck der Sauergasentfemung eingesetzt. Diese Aminkonzentration ist gemäß dem Stand der Technik als die best-geeignete Konzentration zur Entfernung großer Sauergasmengen bekannt. Als physikalische Lösungsmittel sind z.B. Selexol, Morphysorb. Rectisol, etc. bekannt.

Die Aufgabe der Erfindung ist es, ein verbessertes Lösungsmittel zur Verfügung zu stellen, welches die Vorteile der chemischen und die der physikalischen Absorptionsmittel vereinigt sowie besonders hohe Beladungen ermöglicht.

Die Erfindung löst die Aufgabe durch eine Flüssigkeit zur Abtrennung von sauren Gasbestandteilen aus technischen Gasen, enthaltend
- 0,1 bis 99,9 Gewichts-Prozent eines Amins oder mehrerer Amine der Formel H₂N-CH₂(CHR₂)ₓ-(OCH₂(CHR₃)_{y})_{z}-OR₁ mit
- R₁: C₁- bis C₈-Alkyl
   R₂: H oder CH₃
   R₃: H oder CH₃
   x: 0 bis 3
   y: 0 bis 3
   z: 0 bis 10,
   - 0,1 bis 10 Gewichts-Prozent Piperazin,
   - 0 bis 99,8 Gewichts-Prozent eines beliebigen weiteren Lösungsmittels einschließlich Wasser.

Die Flüssigkeit, soweit sie innerhalb eines geschlossenen Kreislaufs geführt wird, kann ferner noch gelöste Restbestandteile der abgeschiedenen sauren Gasbestandteile sowie Verunreinigungen enthalten.

In einer erfindungsgemäßen Ausgestaltung wird CH₃ (C₁-Alkyl, Methyl) als R₁ ausgewählt. In einer weiteren erfindungsgemäßen Ausgestaltung werden für x gleich 1 und für R₂ gleich H ausgewählt. In einer weiteren erfindungsgemäßen Ausgestaltung werden für x gleich 2 und für R₂ gleich H ausgewählt. In einer weiteren erfindungsgemäßen Ausgestaltung werden für y gleich 1 und für R₃ gleich H ausgewählt. In einer weiteren erfindungsgemäßen Ausgestaltung wird für z eine Zahl von 1 bis 4, besonders bevorzugt die Zahl 1 ausgewählt.

In weiteren erfindungsgemäßen Ausgestaltungen, in denen CH₃ (C₁-Alkyl, Methyl) als R₁, x gleich 1 oder 2, und R₂ gleich H ausgewählt sind, wird für z gleich 0 ausgewählt. In weiteren erfindungsgemäßen Ausgestaltungen, in denen CH₃ (C₁-Alkyl, Methyl) als R₁ ausgewählt ist, werden für x gleich 1 und für R₂ gleich CH₃ ausgewählt. Aus letzteren werden in weiteren erfindungsgemäßen Ausgestaltungen entweder für z gleich 0, oder für y gleich 1, für R₃ gleich CH₃ und für z gleich 1 ausgewählt.

Als bevorzugte Ausführungsform ergibt sich somit eine Flüssigkeit der Formel H₂N-(CH₂)₂-O(CH₂)₂-OCH₃, welche mit Wasser oder einem anderen Lösungsmittel verdünnt sein kann und bis zu 10 Gewichts-Prozent Piperazin enthält.

Durch das erfindungsgemäße Lösungsmittel werden ebenso auch andere Sauergaskomponenten, wie H₂S, HCN, COS und Merkaptane absorbiert, was ein weiterer Vorteil der Erfindung ist.

## Patentansprüche

1. Flüssigkeit zur Abtrennung von sauren Gasbestandteilen aus technischen Gasen, enthaltend
• 0,1 bis 99,9 Gewichts-Prozent eines Amins oder mehrerer Amine der Formel
H₂N-CH₂(CHR₂)ₓ-(OCH₂(CHR₃)_{y})_{z}-OR₁
mit
R₁: C₁- bis C₈-Alkyl
R₂: H oder CH₃
R₃: H oder CH₃
x: 0 bis 3
y: 0 bis 3
z: 0 bis 10,
• 0,1 bis 10 Gewichts-Prozent Piperazin,
• 0 bis 99,8 Gewichts-Prozent eines beliebigen weiteren Lösungsmittels einschließlich Wasser.

2. Flüssigkeit nach Anspruch 1, wobei als R₁ gleich CH₃ ausgewählt wird.

3. Flüssigkeit nach einem der Ansprüche 1 oder 2, wobei für x gleich 1 und für R₂ gleich H ausgewählt werden.

4. Flüssigkeit nach einem der Ansprüche 1 oder 2, wobei für x gleich 2 und für R₂ gleich H ausgewählt werden.

5. Flüssigkeit nach einem der Ansprüche 1 bis 4, wobei für y gleich 1 und für R₃ gleich H ausgewählt werden.

6. Flüssigkeit nach einem der Ansprüche 1 bis 5, wobei für z eine Zahl von 1 bis 4 ausgewählt wird.

7. Flüssigkeit nach Anspruch 6, wobei für z gleich 1 ausgewählt wird.

8. Flüssigkeit nach einem der Ansprüche 3 oder 4, wobei für z gleich 0 ausgewählt wird.

9. Flüssigkeit nach Anspruch 2, wobei für x gleich 1 und für R₂ gleich CH₃ ausgewählt werden.

10. Flüssigkeit nach Anspruch 9, wobei für z gleich 0 ausgewählt wird.

11. Flüssigkeit nach Anspruch 9, wobei für y gleich 1, für R₃ gleich CH₃ und für z gleich 1 ausgewählt werden.
